# FASCICULE DE BREVET EUROPEEN

(11) **EP 2 104 010 B1**
(45) Date de publication et mention de la délivrance du brevet: **19.01.2011**
(21) Numéro de dépôt: 09154411.4
(22) Date de dépôt: 05.03.2009
(51) Int. Cl.: G05B 9/03

(54) **Dispositif de détection à seuil sécuritaire d'un système ferroviaire**
Schwellwertbasierter Sicherheitsschaltkreis für ein Eisenbahnsystem
Threshold-based safety circuit for a railway system

(30) Priorité: 19.03.2008 FR 0851762
(43) Date de publication de la demande: 23.09.2009
(73) Titulaire: ALSTOM Transport SA, 92300 Levallois-Perret (FR)
(72) Inventeur: De Mareschal, Odon, 78450 Villepreux (FR); Thanh Tung, Jacques, 91540 Ormoy (FR); Plantard, Pascal, 44115 Basse Goulaine (FR)
(74) Mandataire: Blot, Philippe Robert Emile

(56) Documents cités:
- EP-A- 0 621 521
- US-A1- 2004 078 101

## Description

L'invention se rapporte à un dispositif et un procédé de détection à seuil sécuritaire d'une information d'état à partir d'un signal analogique, destiné notamment à une application de type ferroviaire.

Un tel dispositif est utilisé pour l'acquisition d'informations sécurisées des états d'un circuit de voie, par exemple d'une lampe ou d'une position d'aiguillage par un calculateur de sécurité qui réalise ensuite des traitements associés au changement d'état de l'information et envoie ensuite des commandes aux équipements de signalisation.

Il est connu de dénommer « état restrictif » un état d'une variable de commande ou de signalisation qui, lorsqu'il est détecté et qu'il est erroné, entraîne un grave danger d'accident.

Il est connu de dénommer « état permissif » un état d'une variable de commande ou de signalisation qui, lorsqu'il est détecté et qu'il est erroné, n'entraîne pas de perte de sécurité.

Le terme « détection sécuritaire » définit la conception d'un dispositif ou d'un procédé qui garantit l'impossibilité de détecter un état permissif sur un signal représentant un état restrictif. A l'inverse, dans une telle conception, la détection d'un état permissif ou restrictif sur un signal représentant un état permissif est autorisée.

Un exemple connu de dispositif à détection de seuil sécuritaire utilisé dans le domaine de la sureté nucléaire est décrit dans la demande de brevet US 2004/078101 A1.

Classiquement, un circuit de détection sécuritaire comprend un circuit à seuil sécuritaire, réalisé sous la forme d'une diode ou d'un transistor, et qui utilise de manière sécuritaire la variation d'impédance non linéaire de la jonction à semi-conducteur présente dans ces composants.

La conception et la validation sécuritaire d'un tel circuit de détection est extrêmement complexe et coûteuse du fait notamment d'une limite de basculement mal définie dans la zone linéaire.

Le problème technique est de remplacer un circuit à seuil sécuritaire classique de type jonction à semi-conducteur par un circuit à seuil sécuritaire moins complexe à développer et à valider en terme de conception sécuritaire.

A cet effet, l'invention a pour objet un dispositif de détection à seuil sécuritaire d'une information d'état à partir d'un signal analogique, destiné notamment à une application de type ferroviaire,
ledit dispositif comprenant :
un organe de décision apte à déterminer en une sortie une information d'état sécuritaire détectée du dispositif et au moins deux chaînes d'acquisition de diversification, chaque chaîne d'acquisition incluant en série :
   un circuit d'adaptation du signal analogique en un signal adapté continu analogique sécuritaire ;
   un circuit à seuil non sécuritaire de chaîne apte à fournir une information d'état de chaîne comprenant une source de tension stabilisée en température sur une plage de température prédéterminée et servant de référence de tension ;
   caractérisé en ce que
   le circuit à seuil de chaque chaîne comprend :
un circuit électronique de conversion analogique - numérique apte à recevoir le signal adapté continu analogique sécuritaire, signal d'entrée du convertisseur, et à délivrer un signal de sortie numérique d'échantillonnage du signal d'entrée du convertisseur à une fréquence d'échantillonnage prédéterminée,
une unité de comparaison du signal de sortie numérique à un signal numérique de référence apte à fournir une information d'état de sortie de chaîne comme résultat de la comparaison ;
en ce que le dispositif comprend
un circuit de détection de défaut du dispositif apte à comparer mutuellement les signaux de sortie numériques fournis en des entrées et issus respectivement des circuits de conversion analogique - numérique et à fournir en une sortie un résultat de cohérence fonction de la comparaison mutuelle des signaux de sortie numériques;
et en ce que la sortie de l'organe de décision est fonction du résultat de cohérence fourni par l'unité de détection de défaut et des résultats de comparaison des unités de comparaison associés aux chaînes d'acquisition respectives.

Suivant des modes particuliers de réalisation, le dispositif de détection à seuil sécuritaire peut comporter l'une ou plusieurs des caractéristiques suivantes :
- le signal d'entrée de chaque circuit de conversion analogique - numérique est propre à être échantillonné à une vitesse suffisante supérieure à deux fois l'inverse de la durée de transitoire correspondant au changement d'état du signal d'entrée ;
- le circuit de détection de défaut comprend seulement un comparateur apte à comparer mutuellement les signaux de sortie numériques issus des circuits de conversion analogique-numérique échantillon par échantillon et à déclarer une cohérence mutuelle lorsque l'écart entre deux échantillons est compris dans un intervalle de largeur prédéterminée ;
- le circuit de détection de défaut comprend au moins deux comparateurs vectoriels aptes à comparer mutuellement les signaux de sortie numériques issus des convertisseurs de conversion analogique-numérique qui représentent un ensemble d'échantillons et à déclarer une cohérence mutuelle entre deux signaux numériques lorsqu'une distance entre deux ensembles d'échantillons est inférieure à une valeur prédéterminée ;
- la stabilité en température de la source de tension est réglée de sorte que la sensibilité en température de chaque circuit de conversion analogique - numérique est au moins inférieure à la sensibilité en température du seuil de détection d'un circuit sécuritaire à jonction de semi-conducteur compensé en température, la sensibilité en température étant définie comme une variation de tension, respectivement tension de référence pour le circuit de conversion analogique - numérique et tension de seuil pour le circuit à jonction, observée sur la même plage de température prédéterminée ;
- les convertisseurs analogique-numériques sont de filières technologiques différentes ;
- chaque unité de comparaison d'une chaîne d'acquisition comprend une entrée de réception d'un signal numérique de référence et un moyen de réglage de la valeur du signal numérique de référence ;
- le circuit d'adaptation d'une chaîne comprend un transformateur d'isolation galvanique ;
- le circuit d'adaptation d'une chaîne comprend un circuit redresseur de courant branché au secondaire du transformateur ;
- le circuit d'adaptation d'une chaîne comprend un opto-coupleur ;
- le dispositif comprend seulement deux chaînes d'acquisition, et lorsque le résultat de cohérence mutuelle est négatif, le circuit de détection de défaut est apte à délivrer à l'organe de décision un signal de sortie à l'état restrictif et à émettre en outre un signal de diagnostique d'une panne du dispositif ;
- le dispositif comprend au moins trois chaînes et lorsqu'il existe une majorité de signaux de sortie numériques sensiblement identiques et les états de chaîne sont identiques, l'organe de décision est apte à délivrer l'information d'état des chaînes majoritairement identiques comme état de sortie sécuritaire du dispositif ;
- le circuit de détection de défaut est apte à émettre un signal de diagnostique de panne du dispositif de détection lorsqu'il existe au moins deux signaux de sortie numériques nettement différents ;
- le circuit de détection de défaut est apte à émettre un signal d'identification de la chaîne d'acquisition en panne lorsque deux signaux de sortie numériques sont sensiblement identiques et nettement différents du troisième restant, la chaîne d'acquisition identifiée en panne étant la dite troisième chaîne ; et
- chaque chaîne d'acquisition comprend un circuit de commutation avec au moins une entrée de premier type apte à recevoir un signal adapté continu, une deuxième entrée de deuxième type apte à recevoir un signal de test et une sortie raccordée au circuit de conversion analogique numérique associé de la chaîne apte à délivrer un signal des sortie formant un multiplex temporel des signaux reçus aux entrées de premier et deuxième type.

L'invention a également pour objet un procédé de détection à seuil sécuritaire d'une information d'état à partir de signaux analogiques sécuritaires, destiné notamment à une application de type ferroviaire,
il comprend les étapes consistant à :
échantillonner sur au moins deux voies d'acquisition à diversification des signaux d'entrée analogiques sécuritaires adaptés et isolés, issus d'un même signal analogique d'entrée en des signaux de sortie numériques,
. déterminer la cohérence mutuelle des signaux de sortie numériques de sortie par comparaison et fournir un résultat de cohérence,
. sur chaque signal numérique de sortie, faire une comparaison par rapport à un seuil associé prédéterminé et détecter un état de sortie de chaîne, et
. déterminer l'information d'état sécuritaire de sortie de détection en fonction du résultat de cohérence et des informations des états de sortie des chaînes à diversification.

Suivant des modes particuliers de réalisation, le procédé de détection à seuil sécuritaire comporte l'une ou plusieurs des caractéristiques suivantes :
- il comprend l'étape consistant à effectuer un test d'état de fonctionnement de chaîne à l'aide d'un signal de test calibré injecté en entrée de chaque chaîne.

L'invention sera mieux comprise à la lecture de la description qui va suivre, donnée uniquement à titre d'exemple et faite en se référant aux dessins, sur lesquels :
- la figure 1 est une vue schématique d'une première forme de réalisation de dispositif de détection à seuil sécuritaire selon l'invention,
- la figure 2 est une vue schématique d'une deuxième forme de réalisation de dispositif de détection à seuil sécuritaire selon l'invention,
- la figure 3 est une amélioration de la première forme de réalisation décrite à la figure 1 permettant d'assurer une détection à seuil sécuritaire sur au moins deux entrées de signal analogique, et
- la figure 4 est un ordinogramme illustrant des étapes du procédé de détection à seuil sécuritaire mis en oeuvre par le dispositif de détection décrit à la figure 3 selon l'invention.

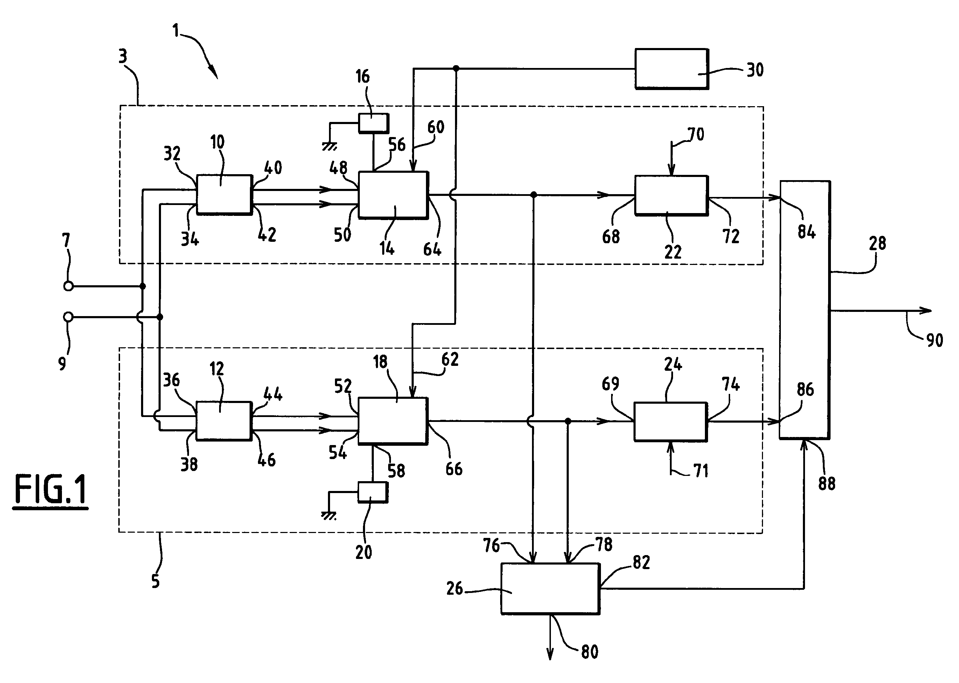

Le dispositif de détection 1 à seuil sécuritaire de la figure 1 est formé de deux chaînes d'acquisition à diversification 3 et 5, chaque chaîne d'acquisition étant apte à recevoir un même signal analogique, ici de type tout ou rien, issu d'une double entrée différentielle formée de bornes 7 et 9.

Chaque chaîne d'acquisition 3 et 5 comprend en série un circuit d'adaptation 10 et 12 à isolation galvanique, un circuit de conversion analogique - numérique 14 et 18 associé respectivement à une source de tension 16 et 20 stabilisée en température et une unité de comparaison 22 et 24.

Le dispositif de détection 1 à seuil sécuritaire comprend également un circuit de détection de défaut 26, un organe de décision 28 apte à déterminer une information d'état sécuritaire de sortie du dispositif et une horloge d'échantillonnage 30.

Les circuits d'adaptation 10 et 12 à isolation galvanique sont également pourvus respectivement de bornes d'entrée 32, 34 et 36, 38 raccordées aux bornes d'entrée 7 et 9 de réception du signal analogique d'entrée.

Les circuits d'isolation galvanique d'adaptation 10 et 12 sont également pourvus respectivement de bornes de sortie 40, 42 et 44, 46 aptes à délivrer un signal adapté continu analogique sécuritaire de type tout ou rien, obtenu à partir d'un signal analogique de type tout ou rien fourni aux entrées 32, 34 et 36, 38.

Un signal adapté sécuritaire correspond à l'impossibilité de transformer par l'adaptation un état réellement restrictif en un état permissif, l'inverse important peu.

Ici, il est supposé que le signal analogique d'entrée est de type tension continue. Le circuit d'isolation galvanique d'adaptation comprend un oscillateur de type LC (montage de type Colpit par exemple avec L une inductance et C une capacité) apte à fournir une tension proportionnelle à la tension d'entrée et un signal de fréquence relativement élevée (50 à 100 kHz) et un transformateur dont le circuit primaire est au moins une partie de l'inductance de l'oscillateur. Un isolement de l'entrée du transformateur par rapport à des circuits branchés au circuit secondaire du transformateur peut ainsi être réalisé. Au secondaire du transformateur, deux redresseurs double alternance sont branchés de telle sorte à pouvoir fournir une tension positive et une tension négative de diversification.

La conception sécuritaire de ce circuit dit en sécurité intrinsèque garantit que la tension redressée ne peut pas augmenter intempestivement.

En variante, lorsque le signal d'entrée se présente sous la forme d'une tension alternative, le circuit d'isolation galvanique d'adaptation 10, 12 comprend un transformateur d'intensité. Une résistance en série avec le primaire du transformateur détermine la consommation du circuit. Le secondaire est chargé par un redresseur suivi par deux résistances de technologies différentes en série, le point commun étant branché en un point à zéro volt du transformateur. Le circuit d'isolation galvanique est ainsi apte à fournir une tension positive et une tension négative de diversification.

En variante, chaque circuit d'isolation galvanique comprend un opto-coupleur.

Les circuits électroniques de conversion analogique - numérique 14 et 18 sont des circuits électroniques intégrés de type VLSI par exemple appelés CAN ou ADC, fabriqués à grande échelle dans le commerce et qui proviennent de deux fabricants différents utilisant des procédés de fabrication différents, les procédés étant encore appelés filières technologiques.

Les circuits électroniques de conversion analogique - numérique 14 et 18 sont associés respectivement aux sources de tension stabilisées en température 16 et 20.

Les circuits électroniques de conversion analogique - numérique 14 et 18 sont raccordés respectivement par leurs bornes d'entrée 48, 50 et 52, 54 aux bornes de sortie 40, 42 et 44, 46 des circuits à isolation galvanique d'adaptation 10 et 12.

Les circuits électroniques de conversion analogique - numérique 14 et 18 comprennent respectivement des bornes d'entrée 56 et 58 de tension de référence raccordées aux sources de tension 16 et 20 stabilisées en température. Ils comprennent en outre respectivement des bornes d'entrée 60 et 62 de commande d'un instant d'échantillonnage, raccordées à l'horloge d'échantillonnage 30 et respectivement des bornes de sortie 64 et 66 aptes à délivrer des signaux de sortie numériques d'échantillonnage sous forme de vecteurs à valeurs binaires correspondant aux signaux analogiques à entrée différentielle fournis en 48, 50 et 52, 54 échantillonnés.

La fréquence d'échantillonnage de chaque circuit de conversion analogique - numérique 14 et 16 est choisie de manière à être suffisante pour fournir aux bornes de sortie 64 et 66 de façon synchrone ou quasi-synchrone aux moins deux valeurs d'échantillons de signaux d'entrée prélevés dans l'intervalle de temps défini par le transitoire correspondant au changement d'état des signaux d'entrée fournis respectivement aux bornes 48, 50 et 52 et 54, respectant ainsi la condition classique dite de « Shannon » qui exige une fréquence d'échantillonnage égale au double de la largeur de bande du spectre représentant le signal à échantillonner pour pouvoir le reconstituer fidèlement.

Ici, la même horloge 30 est raccordée aux deux circuits de conversion analogique - numérique 14, 18, garantissant ainsi un synchronisme 8 d'échantillonnage des deux circuits électroniques de conversion analogique - numérique.

En variante, plusieurs horloges synchrones ou quasi-synchrones entre elles pilotent les circuits de conversion analogique - numérique 14 et 18.

Les sources de tension 16, 20 sont des sources électroniques de tension à faible courant, régulées en température, de type bien connu en électronique analogique sous le terme « régulateur de tension » et présentent chacune une caractéristique de la tension de sortie stable en température.

Les unités de comparaison 22 et 24 comprennent respectivement des bornes d'entrée 68, 69 respectivement reliées aux bornes 64, 66 de sortie des circuits électroniques de conversion analogique - numérique 14, 18 et des bornes d'entrée 70 et 71 destinées à recevoir des signaux de référence en vue d'effectuer une comparaison entre les signaux de sortie numériques issus des circuits de conversion analogique - numérique et les signaux de référence.

Les unités de comparaison 22 et 24 comprennent également des bornes de sortie 72 et 74 respectivement destinées à délivrer le résultat des comparaisons, chaque résultat de comparaison étant une information d'état de sortie des chaînes d'acquisition 3, 5.

Les signaux de référence des unités de comparaison 22, 24 sont des signaux à valeur fixe, réglables par des moyens de réglage non représentés sur la figure 1.

Les unités de comparaison 22, 24 sont par exemple des circuits électroniques numériques de technologie C-MOS appelées classiquement comparateurs numériques. Dans ce cas, les bornes d'entrée 68, 69, 70, 71 sont à entrées multiples du fait que chaque borne reçoit un vecteur de bits sous forme d'entrées parallèles tandis que les bornes de sortie sont simples pour fournir un bit de résultat de la comparaison.

En variante, les signaux de référence sont des signaux plus complexes formés de plusieurs vecteurs binaires en vue d'effectuer une comparaison de type fonctionnelle sur une série temporelle de vecteurs échantillons. Dans ce cas les unités de comparaison 22, 24 sont des circuits électroniques numériques de technologie CMOS plus complexes formés par un ensemble de comparateurs numériques vectoriels dans le cas d'un traitement parallèle ou d'un seul comparateur numérique vectoriel dans le cas d'un traitement sériel, et d'une unité de calcul de distance.

Le circuit de détection de défaut 26 du dispositif comprend deux bornes d'entrée 76 et 78 raccordées aux bornes 64 et 66 respectivement des circuits de conversion analogique - numérique 14, 18.

Le circuit de détection de défaut 26 comprend également deux bornes de sortie 80 et 82.

La première borne 80 est apte à émettre un signal de diagnostic de défaut du dispositif 1, une panne pouvant avoir lieu sur une ou deux chaînes d'acquisition.

La borne 82 est apte à fournir un résultat de cohérence issu de la comparaison mutuelle et d'un calcul de distance des signaux de sortie numériques issus des circuits de conversion analogique - numérique 14, 18.

Ici, deux signaux de sortie numériques sont cohérents entre eux lorsque leur distance mutuelle est inférieure à une valeur prédéterminée.

Ici, la distance entre deux signaux est égale à l'écart entre seulement deux échantillons fournis aux entrées 76, 78 associés respectivement aux circuits de conversion analogique - numérique 14, 18 pris au même instant d'échantillonnage.

Le circuit de détection de défaut 26 est réalisé sous la forme d'un sous-tracteur numérique suivi d'un comparateur numérique à deux entrées vectorielles et une sortie sur un bit de technologie CMOS.

En variante, la distance est une distance fonctionnelle formée à partir des différences de chaque échantillon de même rang de deux séries temporelles d'échantillons associés respectivement aux entrées 76 et 78. Dans ce cas, le circuit de détection de défaut 26 est réalisé sous la forme d'un circuit électronique numérique de technologie CMOS plus complexe formé par un ensemble de comparateurs numériques vectoriels dans le cas d'un traitement parallèle ou d'un seul comparateur numérique vectoriel dans le cas d'un traitement sériel et d'une unité de calcul, et d'une unité de calcul de distance.

En variante, deux signaux de sortie numériques sont cohérents entre eux lorsque le résultat de la fonction de corrélation opérant sur les deux signaux est supérieur à une valeur de seuil prédéterminée. Dans ce cas, le circuit de détection de défaut est réalisé sous la forme d'un corrélateur électronique suivi d'un comparateur électronique.

L'organe de décision 28 apte à déterminer l'information d'état sécuritaire de sortie du dispositif de détection à seuil sécuritaire comprend trois entrées 84, 86 et 88. Les entrées 84 et 86 sont raccordées respectivement aux sorties 72 et 74 des circuits de comparaison numérique 22 et 24 tandis que l'entrée 88 est raccordée à la sortie 82 du circuit de détection de défaut 26.

L'organe de décision 28 comprend une sortie 90 sur laquelle est délivrée l'information d'état sécuritaire de sortie du dispositif 1 qui est fonction du résultat de cohérence fourni par le circuit de détection de défaut 26 en 88 et des résultats de comparaison ou informations d'état de chaîne des unités de comparaison 22 et 24 fournis en les bornes 84 et 86.

Afin de garantir la conception sécuritaire du dispositif, l'organe de décision 28 est apte à forcer l'état de sortie à un état restrictif lorsque le résultat de cohérence est négatif c'est-à-dire lorsque apparaît un absence de cohérence ou lorsque les résultats des comparaisons des unités de comparaison 22, 24 sont différents.

L'organe de décision 28 est réalisé au choix sous la forme d'un ensemble discret de circuits logiques câblé, d'un FPGA ou d'un microprocesseur programmé.

En variante, l'organe de décision 28 et le circuit de détection de défaut 26 sont réalisés sous la forme d'un même microprocesseur programmé.

En fonctionnement, un signal analogique d'entrée de type tout ou rien est fourni aux bornes 7 et 9 d'entrée différentielle. Le même signal analogique d'entrée est fourni aux entrées 32, 34 et 36, 38 des circuits d'isolation galvanique d'adaptation 10 et 12 associés respectivement aux chaînes d'acquisition 3 et 5.

Les signaux d'entrée sont adaptés par les circuits d'adaptation 10 et 12 à isolation galvanique en des signaux adaptés analogiques sécuritaires.

Les signaux ainsi entrant dans les circuits de conversion analogique - numérique 14 et 18 sont échantillonnés à la fréquence d'horloge fournie par l'horloge 30 par rapport à la référence de tension stabilisée en température, respectivement 16 et 20, afin de délivrer aux sorties 64 et 66 des signaux de sortie numériques échantillonnés.

Les signaux de sortie numériques fournis aux entrées 76 et 78 sont comparés mutuellement par le circuit de détection de défaut 26 et le résultat de cohérence se présente sous la forme d'un signal binaire comme déjà décrit ci-dessus.

Le résultat de cohérence indique de manière plus fine et plus précise le fait de savoir si au moins une chaîne d'acquisition 3, 5 avant la comparaison à seuil effectuée au niveau de chaque chaîne est défectueuse par exemple à cause d'un circuit de conversion analogique - numérique en panne dans l'une des deux chaînes.

Dans le cas où un tel défaut existe, quelles que soient les informations de comparaison fournies par les unités de comparaisons 22 et 24, même dans le cas où elles sont identiques, l'organe de décision 28 délivre une information d'état restrictif en 90 afin de garantir la sécurité du système ferroviaire.

Ainsi, la fonction sécuritaire du circuit à seuil sécuritaire de conception classique, coûteux en développement est réalisée par un circuit à seuil de conception différente utilisant des convertisseurs électroniques analogique -numériques largement distribués dans le commerce et une unité de traitement numérique associé peu complexe et coûteuse en terme de développement et validation sécuritaire.

Il est à remarquer qu'un test de cohérence effectué à partir des résultats de comparaison des unités de comparaison seulement correspond à une stratégie de diversification avec vote majoritaire qui est déjà bien connu. Un tel test nécessiterait un nombre important de chaînes de diversification pour rendre la détection de l'état sécuritaire du fait que les unités de comparaison sont des détecteurs à seuil non sécuritaire.

A l'inverse, le test de cohérence mutuelle effectué avant les unités de comparaison de chaîne selon l'invention est sécuritaire du fait que la totalité du contenu informationnel des signaux de sortie des circuits de conversion analogique - numérique et donc leurs différences est analysé.

En outre, un tel dispositif présente l'avantage d'une meilleure maîtrise du seuil de fonctionnement en température du fait qu'il est possible de disposer de source de tension stabilisée en température très précise appelée communément régulateurs de tension. En effet, les sources de tension stables en température de type régulateur de tension garantissent que la sensibilité en température pour chaque circuit de conversion analogique - numérique 14 et 18 est au moins inférieure à la sensibilité en température du seuil de détection d'un circuit classique à jonction semi-conducteur compensé en température et de conception sécuritaire. La sensibilité en température est définie comme une variation de tension, respectivement tension de référence pour le circuit de conversion analogique - numérique et la tension de seuil pour le circuit à jonction, observée sur la même plage de température.

Le dispositif 1 permet également d'améliorer la maîtrise de la limite de basculement dans la zone de fonctionnement linéaire correspondant au transitoire d'un changement d'état en disposant d'un nombre d'échantillons suffisant pendant le transitoire de basculement. Il est permis ainsi d'effecteur un traitement du signal approprié tel qu'un filtrage du bruit thermique, des corrections de distorsion, des suppressions de parasites discrets. Ainsi, il est possible de réduire l'amplitude d'hystérésis du seuil de déclenchement du dispositif de détection.

Avantageusement, le dispositif de détection 1 permet de déterminer si au moins une chaîne est en panne.

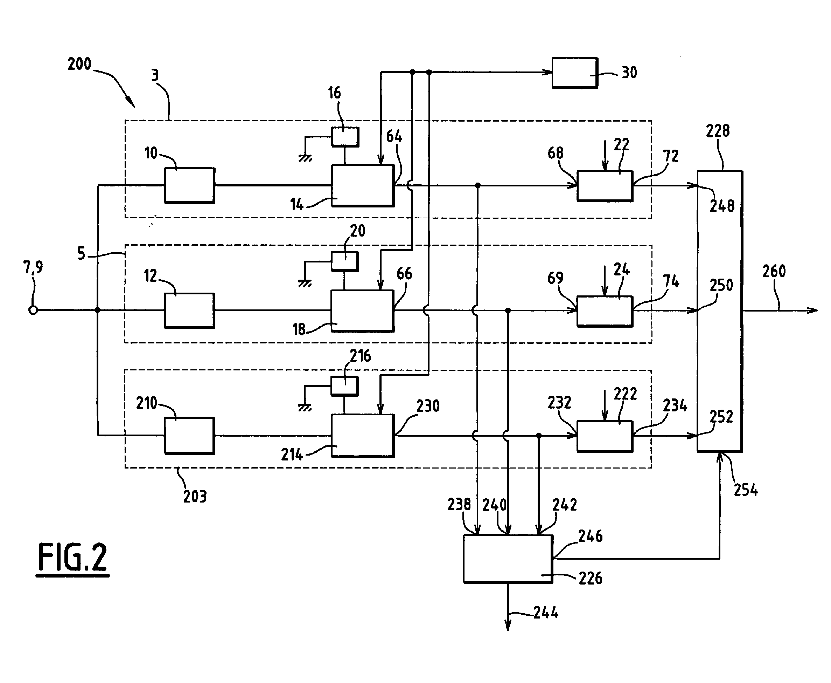

La figure 2 représente un deuxième mode de réalisation du dispositif de détection à seuil sécuritaire 201 avec trois chaînes d'acquisition de diversification.

L'ensemble des trois chaînes d'acquisition configurées en parallèle est formé de deux chaînes d'acquisition 3 et 5 dont la description est identique à celle de la figure 1 et d'une chaîne d'acquisition supplémentaire 203 raccordée également aux bornes d'entrée 7 et 9 et destinée à recevoir le signal analogique d'entrée de type tout ou rien.

Comme les deux chaînes d'acquisition 3 et 5, la chaîne d'acquisition supplémentaire 203 comprend de manière analogue à celle décrite dans la figure 1, montés en série, un circuit d'isolation galvanique d'adaptation 210, un circuit de conversion analogique - numérique 214 associé à une source de tension 216 avec une borne de sortie 230, et une unité de comparaison 222 avec une entrée 232 raccordée à la borne de sortie 230.

Le dispositif 201 comprend également un circuit de détection de défaut 226 à trois entrées et deux sorties et un organe de décision 228 apte à déterminer une information d'état sécuritaire de sortie du dispositif à quatre entrées et une sortie.

Les trois bornes d'entrée 238, 240 et 242 du circuit de détection de défaut 226 sont raccordées respectivement aux bornes 64, 66, 230 de sortie des circuits de conversion analogique - numérique 14, 18, 214.

Le circuit de détection de défaut 226 comprend également une borne de sortie 244 destinée à délivrer un signal de diagnostic de panne du dispositif 201 avec éventuellement une identification d'une chaîne d'acquisition défectueuse et une borne de sortie 242 destinée à fournir un signal de résultat de cohérence sous la forme d'un triplet des valeurs de cohérence.

Les valeurs de cohérence sont les résultats des comparaisons mutuelles des signaux de sortie numériques, pris deux à deux et issus des circuits de conversion analogique - numérique 14, 18, 214.

Ainsi, les première, deuxième, troisième valeurs de cohérence sont respectivement les résultats de comparaison mutuelle entre les signaux numériques de sortie issus respectivement des bornes de sortie 64 et 66, 66 et 230, 64 et 230.

L'organe de décision 228 comprend trois bornes d'entrée 248, 250 et 252 raccordées respectivement aux bornes de sortie 72, 74 et 234 des unités de comparaison et une entrée 254 de fourniture du résultat de cohérence raccordée à la sortie 246 du circuit de détection de défaut 242.

L'organe de décision 224 est apte à déterminer une information d'état sécuritaire de sortie du dispositif 201 en fonction des résultats de comparaison des unités de comparaison fournies aux bornes d'entrée 248, 250 et 252 et du résultat de cohérence délivrée en une entrée 254.

L'organe de décision 228 comprend une borne des sortie 260 destinée à délivrer l'information d'état sécuritaire de sortie du dispositif de détection 201.

En fonctionnement, chaque chaîne d'acquisition 3, 5 et 203 fonctionne de manière analogue à celle décrite à la figure 1 de l'une quelconque des chaînes d'acquisition.

Le circuit de détection de défaut 226 effectue trois comparaisons mutuelles entre les signaux de sortie numériques issus des bornes 64, 66 et 230 des unités de conversion analogique - numérique 14, 18 et 214 pris deux à deux au lieu d'une seule comme pour le premier mode de réalisation et délivre un signal de cohérence sous la forme d'un triplet de valeurs de cohérence, chaque valeur de cohérent étant calculée par un procédé analogue à celui décrit la figure 1.

Lorsque le résultat de cohérence indique que les trois signaux de sortie numériques sont identiques, le circuit de détection de défaut 226 émet sur la borne 244 un signal d'absence de panne tandis que lorsqu'il existe au moins un signal parmi les trois sensiblement différent d'au moins un des deux autres alors le circuit de détection de défaut 226 émet un signal de présence de panne sur l'une au moins des chaînes.

Dans le cas particulier où deux signaux de sortie numériques seulement parmi les trois sont sensiblement identiques, alors la chaîne d'acquisition correspondant au signal de sortie sensiblement différent des deux autres est identifié comme une chaîne défectueuse et un signal d'identification de la chaîne en panne est émis sur la borne de sortie 244.

Lorsqu'une panne est détectée par le circuit de détection de défaut 226 avec seulement deux signaux de sortie numériques sensiblement identiques et deux résultats de comparaison des chaînes associées identiques, l'organe de décision 228 émet sur 260 un signal d'information d'état identique aux résultat de comparaison identique des deux chaînes.

Dans les autres cas, l'organe de décision 228 émet sur 260 un signal d'information d'état restrictif.

Avantageusement, la configuration de la figure 2 permet non seulement de détecter un défaut sur l'une des chaînes d'acquisition mais également dans certains cas de localiser la chaîne défectueuse.

En variante, le dispositif de détection à seuil sécuritaire comprend plus de trois chaînes d'acquisition.

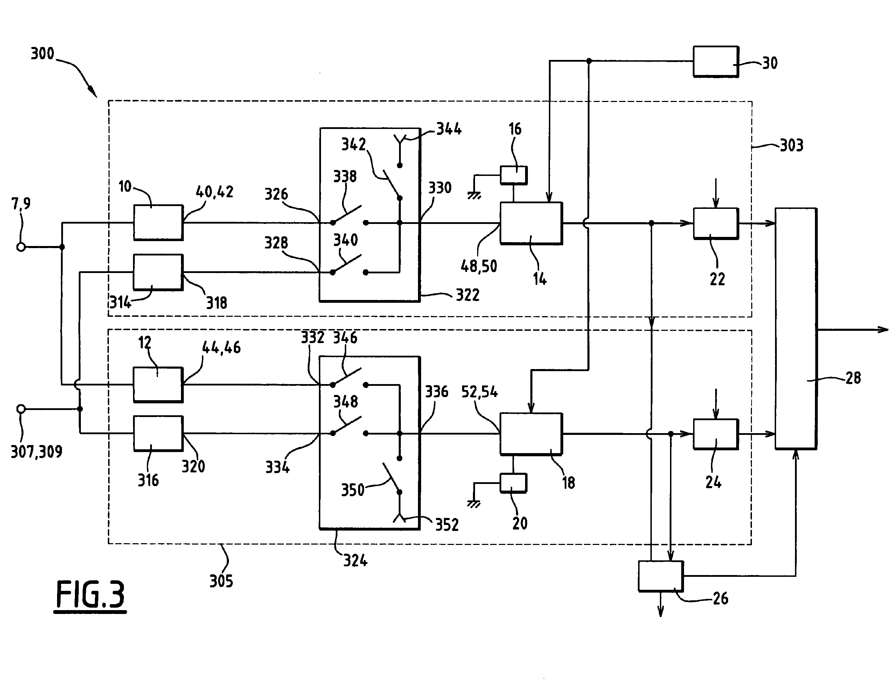

La figure 3 est un troisième mode de réalisation dans lequel le premier mode de réalisation décrit à la figure 1 a été enrichi de commutateurs afin de gérer l'entrée de plusieurs signaux analogiques d'entrée.

Dans ce troisième mode de réalisation, la chaîne d'acquisition 3 décrite à la figure 1 est remplacée par une chaîne d'acquisition 303 dans laquelle il a été ajouté un circuit d'isolation galvanique 314 raccordée à une deuxième entrée de signal analogique 307, 309 et dont une sortie 318 est raccordée en entrée d'un commutateur 322.

Dans ce troisième mode de réalisation, la chaîne d'acquisition 5 décrite à la figure 1 est remplacée par une chaîne d'acquisition 305 dans laquelle il a été ajouté un circuit d'isolation galvanique 316 raccordé à une deuxième entrée de signal analogique 307, 309 et dont une sortie 320 est raccordée en une entrée d'un commutateur 324.

Le commutateur 322 de la chaîne 303 comprend deux bornes à double entrée 326, 328 raccordées respectivement aux bornes de sortie 40,42 et 318 des circuits d'isolation galvanique d'adaptation 10 et 314. Le commutateur 322 comprend également une borne 330 unique apte à délivrer le signal sélectionné lors d'une commutation raccordée à l'entrée de l'unité de conversion analogique - numérique 14.

Le commutateur 324 de la chaîne 305 comprend deux bornes à double entrée 332, 334 raccordées respectivement aux bornes de sortie 44,46 et 320 des circuits d'isolation galvanique d'adaptation 12 et 316.

Le commutateur 324 comprend également une borne 336 unique, apte à délivrer le signal sélectionné lors d'une commutation, et raccordée à l'entrée de l'unité de conversion analogique - numérique 18.

Le commutateur 322 comprend trois interrupteurs 338, 340 et 342.

Les interrupteurs 338, 340 sont raccordés respectivement entre les bornes 326 et 330, entre les bornes 328 et 330, l'interrupteur 342 étant raccordé entre une entrée 344 apte à recevoir un signal de test calibré et la borne de sortie 330.

Le commutateur 324 comprend trois interrupteurs 346, 348 et 350. Les interrupteurs 346, 348 sont raccordés respectivement entre les bornes 332 et 336, entre les bornes 334 et 336, l'interrupteur 350 étant raccordé entre une entrée 352 apte à recevoir un signal de test calibré et la borne de sortie 336.

En fonctionnement, sur la chaîne d'acquisition 303, le commutateur 322 commute sur la sortie 330, selon un multiplex temporel, deux signaux adaptés analogiques continus sécuritaires, reçus respectivement en 326, 328 et résultant respectivement de deux signaux analogiques d'entrée délivrés en 7,9 et 307, 309 et un signal de test reçu sur la borne 344.

En parallèle, sur la chaîne d'acquisition 305, le commutateur 324 commute sur la sortie 336, selon un multiplex temporel, deux signaux adaptés analogiques continus sécuritaires, reçus respectivement en 332, 334 et résultant respectivement de deux mêmes signaux analogiques d'entrée délivrés en 7,9 et 307, 309 que pour la chaîne 303, et un signal de test reçu sur la borne 352.

Les signaux de test fournis respectivement aux entrées 344 et 352 permettent d'effectuer un diagnostic de panne et de repérer la panne au niveau d'une chaîne d'acquisition, en particulier au niveau du circuit de conversion analogique - numérique.

Avantageusement, le mode de réalisation de la figure 3 permet de disposer d'un dispositif de détection universel capable de s'adapter et de s'interfacer à une pluralité de divers signaux analogiques de type tout ou rien.

Il permet ainsi de simplifier la conception et d'abaisser le coût d'un système mettant en oeuvre un grand nombre de détections à seuil sécuritaire sur des signaux analogiques de type tout ou rien.

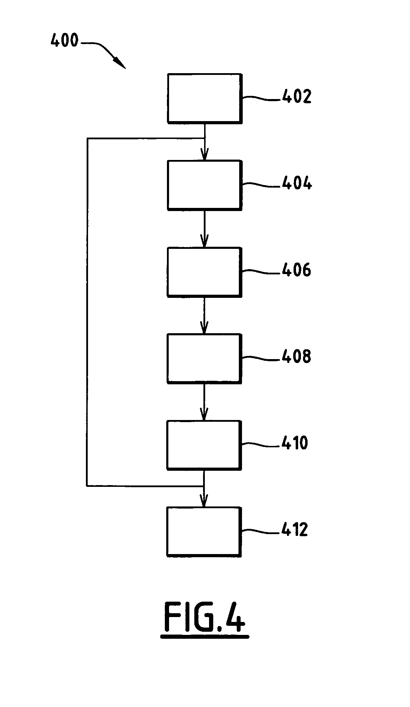

La figure 4 décrit l'organigramme d'un procédé 400 de détection sécuritaire d'une information d'état à partir de plusieurs signaux analogiques d'entrée, ici de type tout ou rien, mis en oeuvre par un dispositif de détection analogue du type décrit à la figure 3.

Dans une première étape d'initialisation 402, l'état de marche de certains composants est vérifié par l'injection de signaux de test dans les entrées 344 et 352 du dispositif décrites à la figure 3.

Ensuite, dans une étape 404, sur chacune des voies d'acquisition de diversification, chaque signal analogique d'entrée est transformé en un signal adapté continu sécuritaire puis échantillonné au travers d'une unité de conversion analogique - numérique en signal de sortie numérique.

Puis, dans une étape 406, pour chaque signal analogique d'entrée, une comparaison mutuelle des signaux numériques de sortie associés à un même signal analogique d'entrée est effectuée afin de déterminer la cohérence des signaux entre eux sous la forme d'un résultat de cohérence.

Ensuite dans une étape 408, pour chaque signal analogique d'entrée et pour chaque chaîne d'acquisition, un résultat de comparaison associé à la chaîne et au signal analogique d'entrée est déterminé à partir d'une comparaison entre le signal de sortie numérique de la chaîne associé et au signal analogique d'entrée, et un signal de référence.

Ensuite dans une étape 410, sur la base du résultat de cohérence déterminé à l'étape 406, un diagnostic de défaut du dispositif est effectué permettant de détecter un défaut sur l'une ou plusieurs des chaînes d'acquisition voire même d'identifier la chaîne d'acquisition qui est en panne.

Egalement dans l'étape 410, pour chaque signal analogique d'entrée un information d'état de sortie détecté est déterminé en fonction du résultat de cohérence déterminé à l'étape 406 et des résultats de comparaison de chaque chaîne déterminées à l'étape 408.

Ces étapes sont reproduites selon une période prédéterminée fonction de l'échantillonnage utilisé pour les convertisseurs analogiques numériques et les temps de cycle de calcul de vérification de cohérence.

L'étape 412 est une étape correspondant à la fin de la mise en oeuvre du processus de détection des informations d'état sécuritaires associées respectivement à chaque signal analogique d'entrée.

Le procédé décrit est mis en oeuvre avantageusement par un dispositif correspondant simple à développer et à valider en respectant les exigences de conception sécuritaire.

## Revendications

1. Dispositif de détection à seuil sécuritaire d'une information d'état à partir d'un signal analogique, destiné notamment à une application de type ferroviaire,
ledit dispositif comprenant :
un organe de décision (28 ; 228) apte à déterminer en une sortie (90) une information d'état sécuritaire détectée du dispositif et au moins deux chaînes d'acquisition (3, 5 ; 203 ; 303, 305) de diversification, chaque chaîne d'acquisition (3, 5, 203, 303, 305) incluant en série :
un circuit d'adaptation (10, 12, 210) du signal analogique en un signal adapté continu analogique sécuritaire ;
un circuit à seuil (14, 16, 22, 18, 20, 24) non sécuritaire de chaîne apte à fournir une information d'état de chaîne comprenant une source de tension (16, 20) stabilisée en température sur une plage de température prédéterminée et servant de référence de tension ;
**caractérisé en ce que**
le circuit à seuil (14, 16, 22, 18, 20, 24) de chaque chaîne (3, 5, 303, 305) comprend :
un circuit électronique de conversion analogique - numérique (14, 18) apte à recevoir le signal adapté continu analogique sécuritaire, signal d'entrée du convertisseur, et à délivrer un signal de sortie numérique d'échantillonnage du signal d'entrée du convertisseur à une fréquence d'échantillonnage prédéterminée,
une unité de comparaison (22, 24 ; 222) du signal de sortie numérique à un signal numérique de référence apte à fournir une information d'état de sortie de chaîne comme résultat de la comparaison ;
**en ce que** le dispositif comprend
un circuit de détection de défaut (26 ; 226) du dispositif apte à comparer mutuellement les signaux de sortie numériques fournis en des entrées (76, 78) et issus respectivement des circuits de conversion analogique - numérique (14, 18) et à fournir en une sortie (80) un résultat de cohérence fonction de la comparaison mutuelle des signaux de sortie numériques;
et **en ce que** la sortie (90) de l'organe de décision (88) est fonction du résultat de cohérence fourni par l'unité de détection de défaut (26 ; 226) et des résultats de comparaison des unités de comparaison (22, 24) associés aux chaînes d'acquisition respectives (3, 4).

2. Dispositif de détection à seuil sécuritaire d'une information d'état selon la revendication 1, **caractérisé en ce que** le signal d'entrée de chaque circuit de conversion analogique - numérique (14, 18) est propre à être échantillonné à une vitesse suffisante supérieure à deux fois l'inverse de la durée de transitoire correspondant au changement d'état du signal d'entrée.

3. Dispositif de détection à seuil sécuritaire d'une information d'état selon l'une quelconque des revendications 1 à 2, **caractérisé en ce que** le circuit de détection de défaut (26, 226) comprend seulement un comparateur apte à comparer mutuellement les signaux de sortie numériques issus des circuits de conversion analogique-numérique (14, 18) échantillon par échantillon et à déclarer une cohérence mutuelle lorsque l'écart entre deux échantillons est compris dans un intervalle de largeur prédéterminée.

4. Dispositif de détection à seuil sécuritaire d'une information d'état selon l'une quelconque des revendications 1 à 2, **caractérisé en ce que** le circuit de détection de défaut (26, 226) comprend au moins deux comparateurs vectoriels aptes à comparer mutuellement les signaux de sortie numériques issus des circuits de conversion analogique-numérique (14, 18) qui reprensentent un ensemble d'échantillons et à déclarer un cohérence mutuelle entre deux signaux numériques lorsqu'une distance entre deux ensembles d'échantillons est inférieure à une valeur prédéterminée.

5. Dispositif de détection à seuil sécuritaire d'une information d'état selon l'une quelconque des revendications 1 à 4, **caractérisé en ce que** la stabilité en température de la source de tension (16, 20) est réglée de sorte que la sensibilité en température de chaque circuit de conversion analogique - numérique (14, 18) est au moins inférieure à la sensibilité en température du seuil de détection d'un circuit sécuritaire à jonction de semi-conducteur compensé en température, la sensibilité en température étant définie comme une variation de tension, respectivement tension de référence pour le circuit de conversion analogique - numérique et tension de seuil pour le circuit à jonction, observée sur la même plage de température prédéterminée.

6. Dispositif de détection à seuil sécuritaire d'une information d'état selon l'une quelconque des revendications 1 à 5, **caractérisé en ce que** les convertisseurs analogique- numériques sont de filières technologiques différentes.

7. Dispositif de détection à seuil sécuritaire d'une information d'état selon l'une quelconque des revendications 1 à 6, **caractérisé en ce que** chaque unité de comparaison d'une chaîne d'acquisition comprend une entrée (70) de réception d'un signal numérique de référence et un moyen de réglage de la valeur du signal numérique de référence.

8. Dispositif de détection à seuil sécuritaire d'une information d'état selon l'une quelconque des revendications 1 à 7, **caractérisé en ce que** le circuit d'adaptation (10, 12, 210) d'une chaîne comprend un transformateur d'isolation galvanique.

9. Dispositif de détection à seuil sécuritaire d'une information d'état selon la revendication 8, **caractérisé en ce que** le circuit d'adaptation (10, 12, 210) d'une chaîne comprend un circuit redresseur de courant branché au secondaire du transformateur.

10. Dispositif de détection à seuil sécuritaire d'une information d'état selon l'une quelconque des revendications 1 à 7, **caractérisé en ce que** le circuit d'adaptation (10, 12, 210) d'une chaîne (3, 5) comprend un opto-coupleur.

11. Dispositif de détection à seuil sécuritaire d'une information d'état selon l'une quelconque des revendications 1 à 10, **caractérisé en ce que** le dispositif comprend seulement deux chaînes d'acquisition (3, 5), et **en ce que** lorsque le résultat de cohérence mutuelle est négatif, le circuit de détection de défaut (126, 226) est apte à délivrer à l'organe de décision (28, 228) un signal de sortie à l'état restrictif et à émettre en outre un signal de diagnostique d'une panne du dispositif.

12. Dispositif de détection à seuil sécuritaire d'une information d'état selon l'une quelconque des revendications 1 à 10, **caractérisé en ce que** le dispositif comprend au moins trois chaînes et **en ce que** lorsqu'il existe une majorité de signaux de sortie numériques sensiblement identiques et que les états de chaîne sont identiques, l'organe de décision (28, 228) est apte à délivrer l'information d'état des chaînes majoritairement identiques comme état de sortie sécuritaire du dispositif.

13. Dispositif de détection à seuil sécuritaire d'une information d'état selon la revendication 12, **caractérisé en ce que** le circuit de détection de défaut (26) est apte à émettre un signal de diagnostique de panne du dispositif de détection lorsqu'il existe au moins deux signaux de sortie numériques nettement différents.

14. Dispositif de détection à seuil sécuritaire d'une information d'état selon la revendication 13, **caractérisé en ce que** le circuit de détection de défaut est apte à émettre un signal d'identification de la chaîne d'acquisition en panne lorsque deux signaux de sortie numériques sont sensiblement identiques et nettement différents du troisième restant, la chaîne d'acquisition identifiée en panne étant la dite troisième chaîne.

15. Dispositif de détection à seuil sécuritaire d'une information d'état selon l'une quelconque des revendications 1 à 14, **caractérisé en ce que** chaque chaîne d'acquisition (303, 305) comprend un circuit de commutation (322, 324) avec au moins une entrée de premier type (338, 346) apte à recevoir un signal adapté continu, une deuxième entrée de deuxième type (344, 352) apte à recevoir un signal de test et une sortie (330, 336) raccordée au circuit de conversion analogique numérique (14, 18) associé de la chaîne (303, 305) apte à délivrer un signal des sortie formant un multiplex temporel des signaux reçus aux entrées de premier et deuxième type.

16. Procédé de détection à seuil sécuritaire d'une information d'état à partir de signaux analogiques sécuritaires, destiné notamment à une application de type ferroviaire,
**caractérisé en ce qu'**il comprend les étapes consistant à
échantillonner (404) sur au moins deux voies d'acquisition (3, 5) à diversification des signaux d'entrée analogiques sécuritaires adaptés et isolés, issus d'un même signal analogique d'entrée en des signaux de sortie numériques,
déterminer (406) la cohérence mutuelle des signaux de sortie numériques de sortie par comparaison et fournir un résultat de cohérence,
sur chaque signal numérique de sortie, faire une comparaison (408) par rapport à un seuil associé prédéterminé et détecter un état de sortie de chaîne,
déterminer (410) l'information d'état sécuritaire de sortie de détection en fonction du résultat de cohérence et des informations des états de sortie des chaînes à diversification.

17. Procédé de détection à seuil sécuritaire d'une information d'état selon la revendication 16, **caractérisé en ce qu'**il comprend l'étape consistant à :
effectuer (402) un test d'état de fonctionnement de chaîne à l'aide d'un signal de test calibré injecté en entrée de chaque chaîne.

## Claims

1. Device for detecting, with a safety threshold, state information from an analogue signal, intended in particular for an application of railway type,
said device including:
a decision element (28; 228), which is capable of determining at one output (90) a detected item of safety state information of the device, and at least two diversification acquisition chains (3, 5; 203; 303, 305) each acquisition chain (3, 5, 203, 303, 305) including, in series:
a circuit (10, 12, 210) for adapting the analogue signal into an adapted continuous analogue safety signal;
a non-safety chain threshold circuit (14, 16, 22, 18, 20, 24), which is capable of supplying chain state information including a voltage source (16, 20) which is stabilised in temperature over a predetermined temperature range and is used as a voltage reference;
**characterized in that**
the threshold circuit (14, 16, 22, 18, 20, 24) of each chain (3, 5, 303, 305) includes:
an electronic analogue-digital conversion circuit (14, 18), which is capable of receiving the adapted continuous analogue safety signal, the input signal of the converter, and of supplying a digital output signal sampling the input signal of the converter at a predetermined sampling frequency;
a unit (22, 24; 222) for comparing the digital output signal to a reference digital signal, said unit being capable of supplying a chain output item of state information as the result of the comparison;
**in that** the device includes
a circuit (26; 226) for detecting a fault in the device, said circuit being capable of comparing mutually the digital output signals supplied at inputs (76, 78) and derived respectively from the analogue-digital conversion circuits (14, 18), and of supplying at an output (80) a consistency result which is a function of the mutual comparison of the digital output signals;
and **in that** the output (90) of the decision element (88) is a function of the consistency result supplied by the fault detection unit (26; 226) and the comparison results of the comparison units (22, 24) associated with the respective acquisition chains (3, 4) .

2. Device for detecting, with a safety threshold, state information, according to Claim 1, **characterized in that** the input signal of each analogue-digital conversion circuit (14, 18) is suitable for being sampled at a sufficient speed greater than twice the inverse of the transient duration corresponding to the change of state of the input signal.

3. Device for detecting, with a safety threshold, state information, according to either one of Claims 1 to 2, **characterized in that** the fault detection circuit (26, 226) includes only a comparator which is capable of comparing mutually the digital output signals from the analogue-digital conversion circuits (14, 18) sample by sample, and of declaring mutual consistency when the discrepancy between two samples is within a predetermined width interval.

4. Device for detecting, with a safety threshold, state information, according to either one of Claims 1 to 2, **characterized in that** the fault detection circuit (26, 226) includes at least two vector comparators which are capable of comparing mutually the digital output signals from the analogue-digital conversion circuits (14, 18), said signals representing a set of samples, and declaring mutual consistency between two digital signals when a distance between two sets of samples is less than a predetermined value.

5. Device for detecting, with a safety threshold, state information, according to any one of Claims 1 to 4, **characterized in that** the stability in temperature of the voltage source (16, 20) is regulated in such a way that the sensitivity in temperature of each analogue-digital conversion circuit (14, 18) is at least less than the sensitivity in temperature of the detection threshold of a safety circuit with a semiconductor junction and compensated in temperature, the temperature sensitivity being defined as a voltage variation, respectively reference voltage for the analogue-digital conversion circuit and threshold voltage for the junction circuit, observed over the same predetermined temperature range.

6. Device for detecting, with a safety threshold, state information, according to any one of Claims 1 to 5, **characterized in that** the analogue-digital converters are of different technological types.

7. Device for detecting, with a safety threshold, state information, according to any one of Claims 1 to 6, **characterized in that** each comparison unit of an acquisition chain includes an input (70) for receiving a digital reference signal and a means of regulating the value of the digital reference signal.

8. Device for detecting, with a safety threshold, state information, according to any one of Claims 1 to 7, **characterized in that** the adaptation circuit (10, 12, 210) of a chain includes a galvanic insulation transformer.

9. Device for detecting, with a safety threshold, state information, according to Claim 8, **characterized in that** the adaptation circuit (10, 12, 210) of a chain includes a current rectifier circuit connected to the secondary side of the transformer.

10. Device for detecting, with a safety threshold, state information, according to any one of Claims 1 to 7, **characterized in that** the adaptation circuit (10, 12, 210) of a chain (3, 5) includes an optocoupler.

11. Device for detecting, with a safety threshold, state information, according to any one of Claims 1 to 10, **characterized in that** the device includes only two acquisition chains (3, 5), and **in that** when the mutual consistency result is negative, the fault detection circuit (126, 226) is capable of supplying to the decision element (28, 228) a restrictive state output signal, and also emitting a diagnostic signal about a failure of the device.

12. Device for detecting, with a safety threshold, state information, according to any one of Claims 1 to 10, **characterized in that** the device includes at least three chains, and **in that** when a majority of digital output signals which are approximately equal exists, and the chain states are identical, the decision element (28, 228) is capable of supplying the state information of the chains which are mostly identical as the output safety state of the device.

13. Device for detecting, with a safety threshold, state information, according to Claim 12, **characterized in that** the fault detection circuit (26) is capable of emitting a diagnostic signal about a failure of the detection device when at least two clearly different digital output signals exist.

14. Device for detecting, with a safety threshold, state information, according to Claim 13, **characterized in that** the fault detection circuit is capable of emitting an identification signal of the acquisition chain which has failed when two digital output signals are approximately identical and clearly different from the third, the acquisition chain which is identified as having failed being said third chain.

15. Device for detecting, with a safety threshold, state information, according to any one of Claims 1 to 14, **characterized in that** each acquisition chain (303, 305) includes a switching circuit (322, 324) with at least one input of the first type (338, 346), said input being capable of receiving an adapted continuous signal, a second input of the second type (344, 352), said input being capable of receiving a test signal, and an output (330, 336) which is connected to the analogue-digital conversion circuit (14, 18) associated with the chain (303, 305), said output being capable of supplying an output signal forming a time multiplex of the signals received at the inputs of the first and second types.

16. Method for detecting, with a safety threshold, state information from analogue safety signals, intended in particular for an application of railway type,
**characterized in that** it includes steps consisting of
sampling (404), on at least two diversification acquisition paths (3, 5), adapted and insulated analogue safety input signals from a single analogue input signal into digital output signals,
determining (406) the mutual consistency of the digital output signals by comparison, and supplying a consistency result,
on each digital output signal, making a comparison (408) in relation to an associated predetermined signal, and detecting a chain output state,
determining (410) the detection output safety state information as a function of the consistency result and the output state information of the diversification chains.

17. Method for detecting, with a safety threshold, state information, according to Claim 16, **characterized in that** it includes the step consisting of:
carrying out (402) a test of the operating state of the chain, using a calibrated test signal which is injected at the input of each chain.

## Patentansprüche

1. Erfassungsvorrichtung mit Sicherheitsschwelle für eine Zustandsinformation ausgehend von einem Analogsignal, welche insbesondere für eine Eisenbahnanwendung bestimmt ist,
wobei die Vorrichtung aufweist:
ein Entscheidungsorgan (28; 228), welches dazu in der Lage ist, an einem Ausgang (90) eine erfasste Sicherheitszustandsinformation der Vorrichtung zu bestimmen, und zumindest zwei Akquisitionsketten (3, 5; 203; 303, 305) zur Diversifizierung, wobei jede Akquisitionskette (3, 5; 203, 303, 305) in Reihe umfasst:
eine Schaltung zur Anpassung (10, 12, 210) des Analogsignals an ein angepasstes, stetiges Analogsicherheitssignal;
eine Nicht-Sicherheits-Kettenschwellwertschaltung (14, 16, 22, 18, 20, 24), die dazu in der Lage ist, eine Kettenzustandsinformation zu liefern, und die eine Spannungsquelle (16, 20) aufweist, welche in einem vorgegebenen Temperaturbereich temperaturstabilisiert ist und als Spannungsreferenz dient; **dadurch gekennzeichnet, dass**
die Schwellwertschaltung (14, 16, 22, 18, 20, 24) jeder Kette (3, 5, 303, 305) aufweist:
einen elektronischen Analog-Digital-Wandlerschaltkreis (14, 18), der dazu in der Lage ist, das angepasste, stetige, analoge Sicherheitssignal, nämlich das Eingangssignal des Wandlers, zu empfangen und ein digitales Abtastausgangssignal des Eingangssignals des Wandlers auf einer vorgegebenen Abtastfrequenz zu liefern,
eine Einheit zum Vergleich (22, 22; 222) des digitalen Ausgangssignals mit einem digitalen Referenzsignal, welche dazu in der Lage ist, eine Zustandsinformation des Kettenausgangs als Ergebnis des Vergleichs zu liefern;
und **dadurch**, dass die Vorrichtung aufweist:
eine Störerfassungsschaltung (26; 226) der Vorrichtung, die dazu in der Lage ist, die digitalen Ausgangssignale miteinander zu vergleichen, welche an den Eingängen (76, 78) geliefert und jeweils von den Analog-Digital-Wandlerschaltkreisen (14, 18) ausgegeben werden und in Abhängigkeit von dem gegenseitigen Vergleich der digitalen Ausgangssignale an einem Ausgang (80) ein Übereinstimmungsergebnis zu liefern ;
und **dadurch**, dass der Ausgang (90) des Entscheidungsorgans (88) abhängt von dem Übereinstimmungsergebnis, welches von der Störerfassungseinheit (26; 226) geliefert wird, und den Vergleichsergebnissen der mit den jeweiligen Akquisitionsketten (3, 4) verbundenen Vergleichseinheiten.

2. Erfassungsvorrichtung mit Sicherheitsschwelle für eine Zustandsinformation gemäß Anspruch 1, **dadurch gekennzeichnet, dass** das Eingangssignal jedes Analog-Digital-Wandlerschaltkreises (14, 18) geeignet ist, mit einer ausreichenden Geschwindigkeit abgetastet zu werden, die höher ist als zweimal der Kehrwert der Übergangsdauer entsprechend der Zustandsänderung des Eingangssignals.

3. Erfassungsvorrichtung mit Sicherheitsschwelle für eine Zustandsinformation gemäß irgendeinem der Ansprüche 1 bis 2, **dadurch gekennzeichnet, dass** die Störerfassungsschaltung (26, 226) nur einen Komparator aufweist, der dazu in der Lage ist, die von den Analog-Digital-Wandlerschaltkreisen (14, 18) ausgegebenen digitalen Ausgangssignale miteinander Probe für Probe zu vergleichen und eine gegenseitige Übereinstimmung zu erklären, wenn der Abstand zwischen zwei Proben innerhalb eines Intervalls von vorgegebener Breite liegt.

4. Erfassungsvorrichtung mit Sicherheitsschwelle für eine Zustandsinformation gemäß irgendeinem der Ansprüche 1 bis 2, **dadurch gekennzeichnet, dass** die Störerfassungsschaltung (26, 226) zumindest zwei vektorielle Komparatoren aufweist, welche dazu in der Lage sind, die von den Analog-Digital-Wandlerschaltkreisen (14, 18) ausgegebenen digitalen Ausgangssignale, welche eine Probengruppe darstellen, miteinander zu vergleichen und eine gegenseitige Übereinstimmung zwischen zwei digitalen Signalen zu erklären, wenn ein Abstand zwischen zwei Probengruppen kleiner als ein vorgegebener Wert ist.

5. Erfassungsvorrichtung mit Sicherheitsschwelle für eine Zustandsinformation gemäß irgendeinem der Ansprüche 1 bis 4, **dadurch gekennzeichnet, dass** die Temperaturstabilität der Spannungsquelle (16, 20) derart geregelt wird, dass die Temperaturempfindlichkeit jedes Analog-Digital-Wandlerschaltkreises (14, 18) zumindest geringer ist als die Temperaturempfindlichkeit der Erfassungsschwelle eines temperaturausgeglichenen Halbleiteranschluss-Sicherheitsschaltkreises, wobei die Temperaturempfindlichkeit als eine Spannungsschwankung bzw. Referenzspannung für den Analog-Digital-Wandlerschaltkreis und Schwellenspannung für den Anschlussschaltkreis definiert ist, und zwar betrachtet in dem gleichen vorgegebenen Temperaturbereich.

6. Erfassungsvorrichtung mit Sicherheitsschwelle für eine Zustandsinformation gemäß irgendeinem der Ansprüche 1 bis 5, **dadurch gekennzeichnet, dass** die Analog-Digital-Wandler aus verschiedenen technologischen Baureihen stammen.

7. Erfassungsvorrichtung mit Sicherheitsschwelle für eine Zustandsinformation gemäß irgendeinem der Ansprüche 1 bis 6, **dadurch gekennzeichnet, dass** jede Vergleichseinheit einer Akquisitionskette einen Eingang (70) zum Empfang eines digitalen Referenzsignals und eine Vorrichtung zur Regelung des Wertes des digitalen Referenzsignals aufweist.

8. Erfassungsvorrichtung mit Sicherheitsschwelle für eine Zustandsinformation gemäß irgendeinem der Ansprüche 1 bis 7, **dadurch gekennzeichnet, dass** die Anpassungsschaltung (10, 12, 210) einer Kette einen galvanischen Isoliertransformator aufweist.

9. Erfassungsvorrichtung mit Sicherheitsschwelle für eine Zustandsinformation gemäß Anspruch 8, **dadurch gekennzeichnet, dass** die Anpassungsschaltung (10, 12, 210) einer Kette eine Gleichrichterschaltung aufweist, welche auf die Sekundärseite des Transformators gesteckt ist.

10. Erfassungsvorrichtung mit Sicherheitsschwelle für eine Zustandsinformation gemäß irgendeinem der Ansprüche 1 bis 7, **dadurch gekennzeichnet, dass** die Anpassungsschaltung (10, 12, 210) einer Kette (3, 5) einen Optokoppler aufweist.

11. Erfassungsvorrichtung mit Sicherheitsschwelle für eine Zustandsinformation gemäß irgendeinem der Ansprüche 1 bis 10, **dadurch gekennzeichnet, dass** die Vorrichtung nur zwei Akquisitionsketten (3, 5) aufweist, und dass, wenn das gegenseitige Übereinstimmungsergebnis negativ ist, die Störerfassungsschaltung (126, 226) dazu in der Lage ist, dem Entscheidungsorgan (28, 228) ein Ausgangssignal zum eingeschränkten Zustand zu liefern und außerdem ein Diagnosesignal hinsichtlich einer Störung der Vorrichtung auszusenden.

12. Erfassungsvorrichtung mit Sicherheitsschwelle für eine Zustandsinformation gemäß irgendeinem der Ansprüche 1 bis 10, **dadurch gekennzeichnet, dass** die Vorrichtung zumindest drei Ketten aufweist, und dass, wenn es eine Mehrheit von praktisch identischen digitalen Ausgangssignalen gibt und die Kettenzustände identisch sind, das Entscheidungsorgan (28, 228) in der Lage ist, die Zustandsinformation der mehrheitlich identischen Ketten als Sicherheitsausgangszustand der Vorrichtung zu liefern.

13. Erfassungsvorrichtung mit Sicherheitsschwelle für eine Zustandsinformation gemäß Anspruch 12, **dadurch gekennzeichnet, dass** die Störerfassungsschaltung (26) dazu in der Lage ist, ein Diagnosesignal einer Störung der Erfassungsvorrichtung auszusenden, wenn es zumindest zwei deutlich unterschiedliche digitale Ausgangssignale gibt.

14. Erfassungsvorrichtung mit Sicherheitsschwelle für eine Zustandsinformation gemäß Anspruch 13, **dadurch gekennzeichnet, dass** die Störerfassungsschaltung dazu in der Lage ist, ein Identifizierungssignal der gestörten Akquisitionskette auszusenden, wenn zwei digitale Ausgangssignale praktisch identisch sind und sich deutlich von dem restlichen dritten unterscheiden, wobei die identifizierte gestörte Akquisitionskette die so genannte dritte Kette bildet.

15. Erfassungsvorrichtung mit Sicherheitsschwelle für eine Zustandsinformation gemäß irgendeinem der Ansprüche 1 bis 14, **dadurch gekennzeichnet, dass** jede Akquisitionskette (303, 305) einen Schaltkreis (322, 324) aufweist mit zumindest einem Eingang der ersten Art (338, 346), der dazu in der Lage ist, ein stetiges angepasstes Signal zu empfangen, einem zweiten Eingang der zweiten Art (344, 352), der dazu in der Lage ist, ein Testsignal zu empfangen und einem Ausgang (330, 336), der an den der Kette (303, 305) zugehörigen Analog-Digital-Wandlerschaltkreis (14, 18) angeschlossen ist, und der dazu in der Lage ist, ein Ausgangssignal zu liefern, welches einen vorübergehenden Multiplexer der an den Eingängen der ersten und zweiten Art empfangenen Signale bildet.

16. Erfassungsverfahren mit Sicherheitsschwelle für eine Zustandsinformation ausgehend von analogen Sicherheitssignalen, welches insbesondere für eine Eisenbahnanwendung bestimmt ist,
**dadurch gekennzeichnet, dass** es die Schritte aufweist, welche daraus bestehen, auf zumindest zwei Akquisitionskanälen (3, 5) mit Diversifizierung angepasste und isolierte analoge Sicherheitseingangssignale abzutasten (404), welche aus einem selben analogen Eingangssignal hervorgegangen sind, und in digitale Ausgangssignale umzuwandeln,
die gegenseitige Übereinstimmung der digitalen Ausgangssignale durch Vergleich zu bestimmen (406) und ein Übereinstimmungsergebnis zu liefern,
an jedem digitalen Ausgangssignal einen Vergleich bezüglich eines vorgegebenen zugehörigen Schwellenwertes durchzuführen und einen Kettenausgangszustand zu erfassen,
die erfasste Ausgangssicherheitszustandsinformation in Abhängigkeit von dem Übereinstimmungsergebnis und den Ausgangszustandsinformationen der Diversifizierungsketten zu bestimmen (410).

17. Erfassungsverfahren mit Sicherheitsschwelle für eine Zustandsinformation gemäß Anspruch 16, **dadurch gekennzeichnet, dass** es den Schritt aufweist, der daraus besteht:
einen Funktionszustandstest der Kette mit Hilfe eines kalibrierten Testsignals, das am Eingang jeder Kette eingegeben wurde, durchzuführen (402).
